# EUROPEAN PATENT APPLICATION

(11) **EP 1 653 403 A1**
(43) Date of publication of application: **03.05.2006**
(21) Application number: 05107938.2
(22) Date of filing: 30.08.2005
(51) Int. Cl.: G06Q 10/00, H04L 29/06, H04L 12/58

(54) **System and method for centralising traveller contact information**

(30) Priority: 27.10.2004 EP 04300736
(71) Applicant: International Business Machines Corporation, Armonk, N.Y. 10504 (US)
(72) Inventor: Truntschka, Carole, 06700, Saint Laurent Du Var (FR); Bazot, Philippe, 06140, Vence (FR); Drouet, François-Xavier, 06610 La Gaude (FR)
(74) Representative: Therias, Philippe

(57) **Abstract**

A traveller contact information centralising system designed to obtain up-to-date information regarding a user's location. The traveller contact information centralising system sends this information to the user (14), so that he can decide whether a centralised directory (10) should be updated with this information. In the event that the user (14) agrees to the update of the centralised directory (10) with the relevant information, the traveller contact information centralising system provides the secure transfer of the information to an application (24) that manages the centralized directory (10).

## Description

### Technical Field

The present invention relates to a system and a method for centralising contact information for travellers

### Background

The following discussion provides a broad overview of the problems encountered with conventional systems for contacting travellers. Since one of the embodiments of the system for centralising traveller contact information employs the lightweight directory access protocol (LDAP), the following discussion will also provide a brief overview of LDAP.

### 1. General Overview

As people travel more and more, it becomes increasingly difficult for other people to contact them. At present, there is no efficient way of ascertaining where a person is when he is not in his usual workplace (e.g. when a person is in a hotel, airplane, airport or on vacation). Furthermore, even if by some chance it is possible to locate a person, it is still necessary to determine the best means of contacting the person at the given location (e.g. depending on the location, it may only be possible to contact a traveller by FAX, email, mobile phone, post etc.)

In order to overcome this problem, organizations have attempted to centralize contact information for their employees in enterprise-wide directories (e.g. Netscape's Directory Server and Microsoft's Active Directory). In conjunction with such data centralization, recent years have seen the development of a number of new applications (e.g. calendar, address book, intelligent mail etc.) for presenting the personal information stored in the centralised data repositories. In tandem with the above developments, recent years have also seen the evolution of a number of applications that use centralized contact information to handle phone call rerouting, mail forwarding etc.

Nonetheless, a problem still exists in updating centralized contact information directories with efficient, standardized information, whilst protecting the user's privacy and control over the information stored in the centralized directories.

### 2. Lightweight Directory Access Protocol (LDAP)

LDAP comprises a set of protocols for accessing information directories. Although not yet widely implemented, LDAP should eventually make it possible for almost any application running on virtually any computer platform to obtain directory information, such as email addresses and public keys. LDAP is based on standards contained within the X.500 standard, but is significantly simpler to implement. This is borne out by the fact that LDAP is supported by most major programming languages, including C, Java, and Perl, and either is, or will be, supported by most major operating systems including Solaris, GNU/Linux, Microsoft Windows, and Mac OS.

From a technical point of view, LDAP was designed to be an extensible general-purpose directory. To this end, it uses an object-oriented, inheritance-based schema definition, which provides for easy extension. More particularly, LDAP includes a base schema as part of its specification and other *de facto* standards for various services. The LDAP specification states that LDAP clients can request an entire feature list and data schema from any LDAP server, thus allowing a client to vary its functionality according its server. Furthermore, since LDAP uses UTF-8 for internal string representations, LDAP can potentially store and manipulate text in any language.

Beyond the above interoperability features, LDAP also provides advanced data replication and security features.

In particular, using data replication, it is possible to replicate all or part of an LDAP directory to physically separate locations. This feature provides highly-available data in which data can be moved as close as necessary to the client. Furthermore, using referrals, data mastery of portions of the directory can be distributed across different LDAP servers, thus allowing individual sections of an organisation to have control over particular data portions whilst maintaining a single authority over each piece of data.

Whilst existing security protocols such as Transport Layer Security (TLS) and Simple Authentication and Security Layer (SASL) enable secure data transmission, they do not mediate the processes of access control and user authentication. LDAP provides the ability to control all three aspects of the process of securing information in a directory (namely access, authentication, and authorization) through Access Control Lists (ACLs). ACLs can be used to grant access based on a number of different factors. In particular, ACLs can be used to force specific types of authentication, and once the client is fully authenticated as a valid user, ACLs can be used to authorize the user.

### Summary of the invention

The present invention is directed to a traveller contact information centralising method and system and computer program as defined in independent claims. Further embodiments of the invention are provided in the appended dependent Claims.

The traveller contact information centralising system is designed to obtain up-to-date information regarding a user's location. The traveller contact information centralising system sends this information to the user, so that he can decide whether a centralised directory should be updated with this information. In the event that the user agrees to the update of the centralised directory with the relevant information, the traveller contact information centralising system provides the secure transfer of the information to an application that manages the centralized directory.

### Brief description of the drawings

Three embodiments of the traveller contact information centralising system will now be described with reference to the accompanying drawings in which:
Figure 1 is a block diagram of the hardware and software architecture of a generic traveller contact information centralising system in accordance with a first aspect of the invention;
Figure 2 is a block diagram of the method of updating traveller contact information performed by the second embodiment of the invention; and
Figure 3 is a block diagram of the method of updating traveller contact information performed by the third embodiment of the invention.

### Detailed description of the invention

### 1. General Overview

The first embodiment relates to a generic traveller contact information centralising system without reference to a specific data access and transfer protocol. The second and more preferred embodiment is a more specialised form of the traveller contact information centralising system in which the LDAP protocol is used to facilitate the process of accessing and updating a centralised directory. The third embodiment is a traveller contact information centralising system of similar architecture to the second embodiment. However, the third embodiment differs from the second embodiment insofar as the third embodiment uses a different mechanism for updating traveller contact information stored in a central data repository.

For the sake of simplicity, the traveller contact information centralising system of the first embodiment will be known henceforth as a generic traveller contact centre. The traveller contact information centralising system of the second and third embodiments will also be respectively known as the LDAP traveller contact centre and the temporary update traveller contact centre.

### 2. Hardware and Software Architecture of the Generic Traveller Contact Data Center

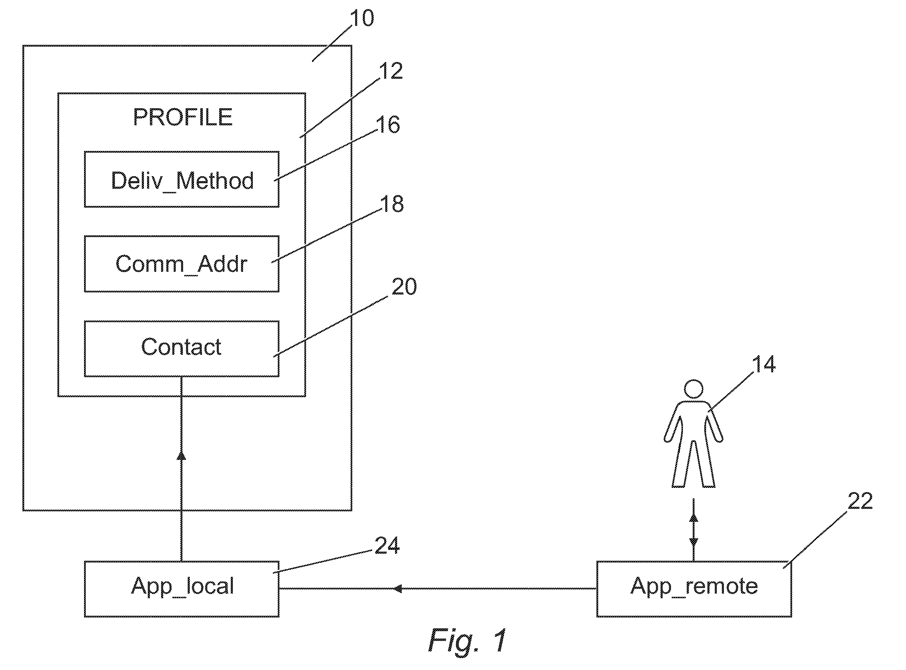

Referring to Figure 1, the generic traveller contact data centre comprises a central directory 10 that contains a user profile 12 for each traveller 14 registered therewith. Each user profile 12 includes details of the preferred delivery method 16 (i.e. mobile phone or email) and communication addresses 18 of the traveller 14. The user profile 12 also contains information on one or more intermediary points 20 along the traveller's itinerary.

At any given intermediary point, a first application 22 can provide the traveller 14 with contact information for the intermediary point. The first application 22 could be a standard email application, or SMS messaging application capable of sending contact information to the traveller's email address or mobile phone number.

The generic traveller contact data centre comprises a second application 24 acting as a gateway to the central directory 10. The second application 24 is capable of receiving email or SMS messages containing contact information from the intermediary point. On receipt of the contact information, the second application 24 is capable of updating the user profile 12 of the traveller 14 in the central directory 10 with the relevant contact information.

### 3. Detailed Description of a User Profile

A user profile 12 is composed of the following standard fields.

Identity:
Name
   CommonName
   Surname
   GivenName
   Initials
E-Mail address
Phone number
Mobile number
CountryName
LocalityName *
StateOrProvinceName *
OrganizationName *
OrganizationalUnitName *
Title
Passport number
   Expiration date
Temporary information:
   Validity of the information
   Date of update
   E-Mail address
   Fax Number
   Postal address
   Phone number

In a preferred embodiment of the traveller contact information centralising system, the information stored in the central directory 10 and provided by the first application 22 (at any given intermediary point) is provided in accordance with the VCARD standard (RFC2426). Information regarding the VCARD standard can be obtained from the Internet Mail Consortium ( http://www.imc.org/pdi/) and in particular in http://www.imc.org/pdi/vcard-21.doc.

### 4. Method of the Generic Traveller Contact Data Centre

For the purposes of explaining the operation of the generic traveller contact data centre an example will be used in which an intermediary point on a traveller's itinerary is a hotel. However, it will be understood that the traveller contact information centralising system is not limited to this specific example and could in fact operate in a similar fashion at other types of intermediary points (e.g. airport etc). Furthermore, the present example relies on the transmission of contact information to the central directory by way of SMS messaging (i.e. through an SMS gateway). However, it will be understood that the central directory (or LDAP server) of the traveller contact information centralising system is not limited to the receipt of SMS messages, but could in fact, also receive and extract contact information from emails.

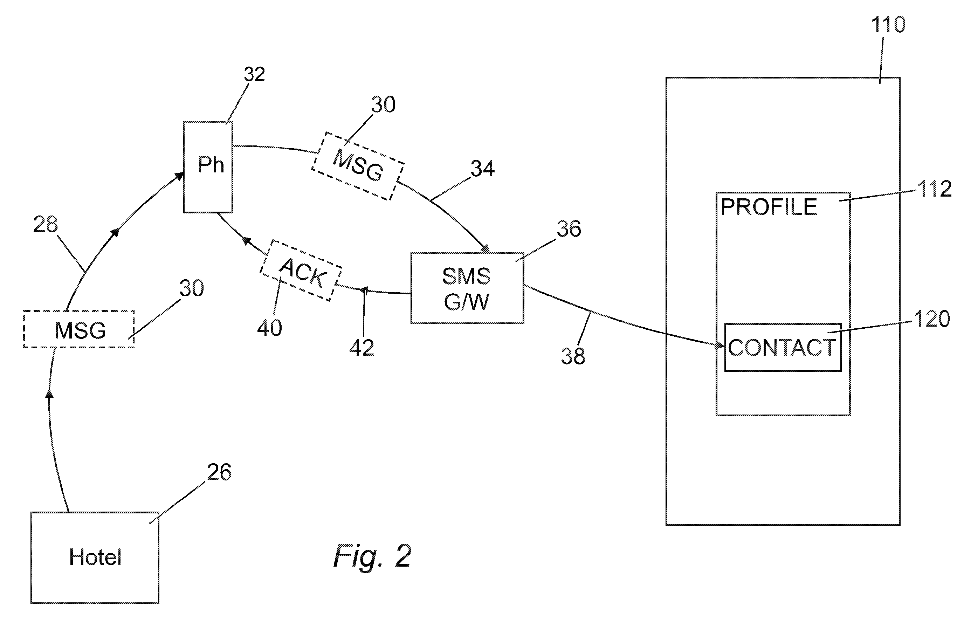

Returning to the present example, and referring to Figure 2, on the arrival of the traveller at a hotel and the validation of the traveller's reservation therein, a hotel receptionist 26 forwards 28 a message 30 to the traveller's mobile phone 32 (or preferred email address). It is to be appreciated that the forwarding of the encoded message to the traveller's mobile phone may be a service included in a membership program proposed to travellers. The message 30 is encoded in vcard format and contains the hotel's contact information (e.g. phone number, FAX number, email address etc.) as well as the dates of the traveller's stay in the hotel.

On receipt of the message 30, the traveller may choose whether to forward the message 30 to the central directory 110 to update his user profile 112. In the event that the traveller chooses to update his user profile 112 with the hotel's contact information, the traveller forwards 34 the hotel's message 30 to an SMS gateway 36 to the central directory 110.

On receipt of the message 30 by the SMS gateway 36, the phone number of the originator of the message 30 is checked against the list of user mobile phone numbers stored in the central directory 110. If the phone number of the originator of the message 30 is present in the central directory 110 and a corresponding user profile 112 is found, the message 30 is assumed to be valid. The contact information of the hotel is extracted from the SMS message 30 and the contact information 120 stored in the relevant user profile 112 is update accordingly.

Once the user's profile 112 is updated 38 with the relevant contact information, an acknowledgement message 40 is returned 42 to the traveller's mobile phone 32.

### 5. Hardware and Software Architecture of the LDAP Traveller Contact Data Center

The central directory of the LDAP traveller contact data center is based on an LDAP server. As in the central directory of the generic traveller contact data centre, the LDAP server of the LDAP traveller contact data centre contains several user profiles, each of the user profiles being identified by a unique user name. Only the user identified by a particular user name (or an application with appropriate access rights) can update the user's profile. The application used to create a user profile can be a basic browser supporting an LDAP interface, or dedicated component using information contained in email or SMS messages. The processes of authentication and access control in the LDAP server are handled by the ACL mechanisms of LDAP in order to prevent unauthorized users or applications gaining access to a user's profile.

### 6. Method of the LDAP Traveller Contact Data Centre

The method implemented by the LDAP traveller contact data centre is broadly similar to that previously described for the generic traveller contact data centre. However, since the central directory in the LDAP traveller contact centre is maintained on an LDAP server, contact information stored in a given user profile is updated using an LDAP update procedure.

### 7. Method Performed by the Temporary Update Traveller Contact Data Centre

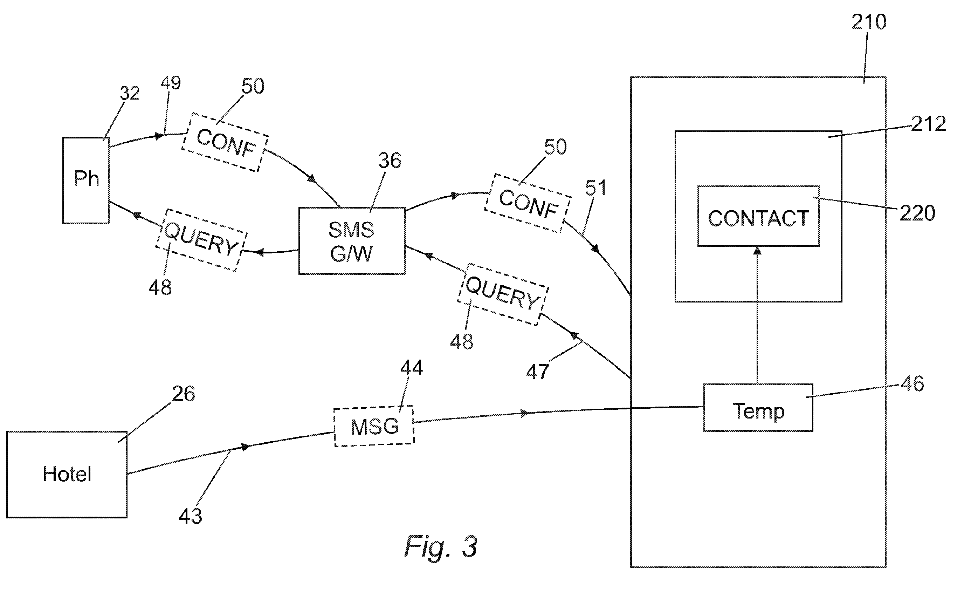

Referring to Figure 3, the hardware architecture of the temporary update traveller contact data centre is substantially similar to that of the LDAP traveller contact data centre. However, an LDAP server 210 of the temporary update traveller contact data centre includes a temporary directory 46 in which a user's contact information may be stored and updated without the permission of the user. Consequently, the flow of information between an intermediary point, the user and the LDAP server 210 differs from that of the LDAP traveller contact data centre.

In particular, instead of transmitting the contact information of the hotel directly to the traveller's mobile phone 32 (as in the generic and LDAP traveller contact data centres), in the temporary update traveller contact data centre, the hotel receptionist 26 transmits 43 a message 44 containing the hotel's contact details to the central server 210. The hotel's contact information is stored in a temporary directory 46 and the central server 210 sends 47 a query 48 to the SMS gateway 36 requesting permission to update the user's contact information 220. It is to be appreciated that in a lieu of an hotel receptionist, the full service of transmitting hotel's contact details to the central server, and of storing these details in a VCARD format of the user profile for the purpose of updating it, maybe handled by a service provider.

The SMS gateway 36 forwards 49 the query 48 to the traveller's mobile phone 32. In the event that the traveller authorises the update of his user profile 112, the traveller's mobile phone 32 transmits 49 a confirmatory message 50 to the SMS gateway 36. The confirmatory message 50 includes details of the transaction ID and the time of the validity of the update information. The SMS gateway 36 forwards 51 the confirmatory message 50 to the central server 210, which transfers the hotel's contact information from the temporary directory 46 to a contact information field 220 of a user's profile 212.

Alterations and modifications may be made to the above without departing from the scope of the invention.

## Claims

1. A traveller contact information centralising system comprising
a server 10 disposed at a first location wherein the server 10 comprises a first store 12 of information relating to one or more users;
a first data transmission means 26 disposed at a second location, wherein the second location is remote to the first location;
a second data transmission means 32 accessible by the one or more users; and
an access controlling means 36 providing access to the information stored in the first store 12
wherein the first data transmission means 26 is adapted to transmit a first message to the second data transmission means 32 and the first message contains contact information for the second location;
the second data transmission means 32 is controllable by a user to transmit a second message to the access controlling means 36, wherein the second message comprises the contact information of the second location; and
the access controlling means 36 is adapted to determine whether the information stored in the first store 12 should be updated with the contact information of the second location.

2. A traveller contact information centralising system as claimed in Claim 1 wherein the first and second data transmission means is selected from the group comprising emailing means and SMS messaging means.

3. A traveller contact information centralising system as claimed in any one of the preceding Claims wherein the information stored in the server is stored in the VCARD format.

4. A traveller contact information centralising system as claimed in any one of the preceding Claims wherein the server is an LDAP server.

5. A traveller contact information centralising system as claimed in Claim 4 wherein the LDAP server comprises a second store of information relating to the users that may be altered without the permission of the users.

6. A traveller contact information centralising system as claimed in Claim 5 wherein the first data transmission means is adapted to transmit the first message to the LDAP server wherein the contact information of the second location is stored in the second store.

7. A traveller contact information centralising system as claimed in Claim 6 wherein the LDAP server is adapted to transmit a third message to the second data transmission means, wherein the third message requests permission to transfer the contact information of the second location from the second store to the first store.

8. A traveller contact information centralising system as claimed in Claim 7 wherein the second data transmission means is adapted to transmit a fourth message to the server, wherein the fourth message contains instructions to transfer the contact information of the second location from the second store to the first store.

9. A traveller contact information centralising method for use in a messaging means, the method comprising the steps of:
(a) receiving a first message comprising the contact information of a first location;
(b) permitting a user to decide whether the contact information of the first location should be transmitted to a remote server 10;
(c) transmitting a second message to the remote server 10 containing the contact information of the first location in the event that the user authorises the transmission.

10. A traveller contact information centralising method for use in a messaging means as claimed in Claim 9 wherein the first message is received in, and the second message is transmitted in, VCARD format.

11. A traveller contact information centralising method for use in a messaging means as claimed in Claim 9 or Claim 10 wherein the remote server is an LDAP server.

12. A traveller contact information centralising method for use in a messaging means as claimed in any one of Claims 9 to 11 wherein the first message is transmitted a transmission medium selected from the group comprising an email and an SMS message.

13. A traveller contact information centralising method for use in a messaging means as claimed in any one of Claims 9 to 12 wherein the method further comprises the step of receiving a third message acknowledging that a record in the remote server was updated with the contact information of the first location.

14. A traveller contact information centralising method for use in a messaging means as claimed in any one of Claims 9 to 13 wherein the messaging means is selected from the group comprising an email account and a mobile phone.

15. A computer program product stored on a medium readable by a computer machine, the computer program product tangibly embodying readable program means for causing the computer machine to perform the method according to any one of Claims 9 to 14.

16. A system for centralizing user profile information comprising at least a storage means to store in VCARD format a set of the user profile information to be used in the steps of the method according to any one of Claims 9 to 14.

17. A traveller contact information centralising method for use in a remote server, the method comprising the steps of:
(a) receiving a first message from a user wherein the first message comprises the contact information of a first location;
(b) determining whether the user is entitled to update a stored record 12; and
(c) updating the stored record 12 in the event that the user is entitled to update the record 12.

18. A traveller contact information centralising method for use in a remote server as claimed in Claim 17 wherein the contact information of the first location is received in VCARD format.

19. A traveller contact information centralising method for use in a remote server as claimed in Claim 17 or Claim 18 wherein the first message is received in a medium selected from the group comprising an email and an SMS message.

20. A traveller contact information centralising method for use in a remote server as claimed in any one of Claims 17 to 19 wherein the first message is received from a mobile phone.

21. A traveller contact information centralising method for use in a remote server as claimed in Claim 20 wherein the step of determining whether the user is entitled to update a stored record is performed by comparing the phone number of the mobile phone from which the first message is received with a stored list of mobile phone numbers.

22. A traveller contact information centralising method for use in a remote server as claimed in any one of Claims 17 to 21 wherein the steps are performed in accordance with LDAP.

23. A traveller contact information centralising method for use in a remote server as claimed in Claim 22 wherein the step of determining whether the user is entitled to update a record is performed by an LDAP ACL.

24. A computer program product stored on a medium readable by a computer machine, the computer program product tangibly embodying readable program means for causing the computer machine to perform the method according to any one of Claims 17 to 23.

25. A system for centralizing user profile information comprising at least a storage means to store in VCARD format a set of the user profile information to be used in the steps of the method according to any one of Claims 17 to 23.

26. A traveller contact information centralising method for use in a remote server comprising the steps of:
(a) receiving a first message from a user wherein the first message comprises the contact information of a first location;
(b) storing the contact information of the first location in a first data store 46;
(c) transmitting a second message to a first data transmission means requesting permission to transfer the contact information of the first location into a second data store; and
(d) receiving a third message from the first data transmission means 32 providing permission to transfer the contact information of the first location from the first data store 46 to the second data store 212.

27. A computer program product stored on a medium readable by a computer machine, the computer program product tangibly embodying readable program means for causing the computer machine to perform the method according to Claim 26.

28. A system for centralizing user profile information comprising at least a storage means to store in VCARD format a set of the user profile information to be used in the steps of the method according to Claim 26.

29. A traveller contact information centralising method for use in a messaging means comprising the steps of:
(a) receiving a first message requesting permission for the transfer of contact information of a first location from a first data store 46 in a remote server 210 to a second data store 212 in the remote server 210;
(b) requesting a user for permission for the transfer of contact information of the first location from the first data store 46 in the remote server 210 to the second data store 212 in the remote server 210;
(c) receiving a notification from the user of permission for the transfer of the contact information to the second data store 212 in the remote server 210; and
(d) transmitting a second message to the remote server 210 confirming permission for the transfer of the contact information to the second data store 212 in the remote server 210.

30. A computer program product stored on a medium readable by a computer machine, the computer program product tangibly embodying readable program means for causing the computer machine to perform the method according to Claim 29.

31. A system for centralizing user profile information comprising at least a storage means to store in VCARD format a set of the user profile information to be used in the steps of the method according to Claim 29.
